# EUROPEAN PATENT APPLICATION

(11) **EP 4 790 877 A1**
(43) Date of publication of application: **12.08.2026**
(21) Application number: 23954772.2
(22) Date of filing: 05.10.2023
(51) Int. Cl.: H02K 1/2706

(54) **ROTOR FOR ELECTRIC MOTOR**

(71) Applicant: Kawasaki Jukogyo Kabushiki Kaisha, Kobe-shi, Hyogo 650-8670 (JP); University Public Corporation Osaka, Osaka-shi, Osaka 545-0051 (JP)
(72) Inventor: SHIBAYAMA, Yoshiyasu, KAISHA, Hyogo 6508670 (JP); IMAMURA, Keigo, KAISHA, Hyogo 6508670 (JP); UETA, Kazuki, KAISHA, Hyogo 6508670 (JP); MORIMOTO, Shigeo, Sakai-shi, Osaka 5998531 (JP)
(74) Representative: Bals & Vogel Patentanwälte PartGmbB
(86) International application number: PCT/JP2023/036353
(87) International publication number: WO 2025/074561

(57) **Abstract**

An N-pole rotor (1A) for use in an electric motor, according to one embodiment, includes pole regions (2) that are obtained by equally dividing the rotor into N portions about a rotational axis (10). An overall shape of the pole regions (2) is rotationally symmetrical about the rotational axis (10), and is line-symmetrical with respect to a particular line passing through the rotational axis (10). The pole regions (2) include at least four asymmetrical pole regions (22), and each asymmetrical pole region (22) has a shape that is asymmetrical with respect to a center line (20) of the asymmetrical pole region (22).

## Description

### Technical Field

The present disclosure relates to a rotor for use in an electric motor.

### Background Art

Conventionally, N-pole rotors for use in electric motors have been known. Such rotors include permanent-magnet rotors and synchronous-reluctance rotors. In a permanent-magnet rotor, N permanent magnets or N groups of permanent magnets are located in a circumferential direction, and these permanent magnets are held on the surface of, or inside, the rotor core. In a synchronous-reluctance rotor, the rotor core includes N salient poles that are located in the circumferential direction.

It is generally known that, in an electric motor, when the amount of magnetic flux is increased to increase torque, magnetic saturation of a rotor core and a stator core causes an increase in torque ripple. For example, Patent Literature 1 discloses a rotor, for use in an electric motor, that is capable of reducing torque ripple.

### Citation List

### Patent Literature

PTL 1: Japanese Patent No. 6390506

### Summary of Invention

### Technical Problem

Specifically, the rotor of Patent Literature 1 is an eight-pole rotor. The rotor is equally divided into eight pole regions around its rotational axis, and permanent magnets are held inside the rotor core in the respective eight pole regions. Each of the permanent magnets extends in a direction orthogonal to the center line of a corresponding one of the pole regions, i.e., extends in a direction orthogonal to the radial direction of the rotor. All of the eight pole regions have the same shape. That is, the overall shape of the eight pole regions is rotationally symmetrical about the rotational axis.

In each pole region, the rotor core includes a pair of flux barriers positioned on both sides of the permanent magnet. The rotor of Patent Literature 1 rotates in a single direction. The flux barrier that is positioned on a side of the permanent magnet opposite to the rotation direction has such a shape that the outer circumferential half of the flux barrier protrudes in the direction opposite to the rotation direction, whereas the flux barrier that is positioned on the rotation direction side of the permanent magnet has such a shape that the outer circumferential half of the flux barrier is recessed in the direction opposite to the rotation direction. That is, each pole region has a shape that is asymmetrical with respect to the center line of the pole region. This makes it possible to reduce torque ripple.

As described above, in the rotor of Patent Literature 1, each pole region has an asymmetrical shape, and all of the pole regions have the same shape. Accordingly, torque characteristics differ between a case where the rotor is rotated in a preset rotation direction and a case where the rotor is rotated in a reverse direction opposite to the rotation direction.

In view of the above, an object of the present disclosure is to provide a rotor, for use in an electric motor, that is capable of reducing torque ripple and whose torque characteristics do not change regardless of its rotation direction.

### Solution to Problem

The present disclosure provides a rotor for use in an electric motor, the rotor being an N-pole rotor (N is an even number greater than or equal to 4), the rotor including pole regions that are obtained by equally dividing the rotor into N portions about a rotational axis, wherein: an overall shape of the pole regions is rotationally symmetrical about the rotational axis, and is line-symmetrical with respect to a particular line passing through the rotational axis; the pole regions include at least four asymmetrical pole regions; and each asymmetrical pole region has a shape that is asymmetrical with respect to a center line of the asymmetrical pole region.

### Advantageous Effects of Invention

The present disclosure provides a rotor, for use in an electric motor, that is capable of reducing torque ripple and whose torque characteristics do not change regardless of its rotation direction.

### Brief Description of Drawings

[FIG. 1]FIG. 1 is a front view of a rotor according to Embodiment 1.
[FIG. 2]FIG. 2 is an enlarged view of one asymmetrical pole region.
[FIG. 3]FIG. 3A is a front view of a rotor according to Embodiment 2, and FIG. 3B is an enlarged view of one asymmetrical pole region.
[FIG. 4]FIGS. 4A to 4D show variations of an asymmetrical pole region.
[FIG. 5]FIG. 5A is a front view of a rotor according to Embodiment 3, and FIG. 5B is an enlarged view of one asymmetrical pole region.
[FIG. 6]FIG. 6A is a front view of a rotor according to Embodiment 4, and FIG. 6B is an enlarged view of one asymmetrical pole region.
[FIG. 7]FIG. 7A is a front view of a rotor according to Embodiment 5, and FIG. 5B is an enlarged view of one asymmetrical pole region.

### Description of Embodiments

### <Embodiment 1>

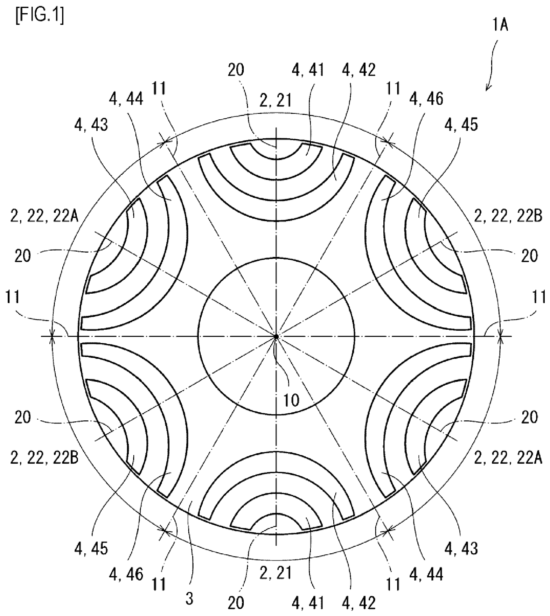

FIG. 1 shows an N-pole rotor (N is an even number greater than or equal to 4) 1A for use in an electric motor, according to Embodiment 1. In the present embodiment, N = 6. The rotor 1A forms, together with a rotational shaft penetrating the rotor 1A and a stator surrounding the rotor 1A, an electric motor.

The rotor 1A includes six pole regions 2, which are obtained by equally dividing the rotor 1A into N portions about a rotational axis 10. That is, the pole regions 2 are regions demarcated by angle lines 11 at pitches of 360/N degrees. In the present embodiment, a center line 20 of each pole region 2 also serves as the center line of a corresponding one of the aforementioned N magnetic poles.

In the present embodiment, the rotor 1A is a permanent-magnet rotor in which N groups of permanent magnets are located in a circumferential direction and are held inside a rotor core 3. This is called IPM (Interior Permanent Magnet). Specifically, each pole region 2 includes a part of the rotor core 3 and permanent magnets 4 forming one permanent magnet group. The polarities of the permanent magnet groups, that is, the orientations of their north poles and south poles, in the radial direction of the rotor 1A are alternately reversed in the circumferential direction.

In the present embodiment, each permanent magnet group includes two permanent magnets 4. Alternatively, each permanent magnet group may include three or more permanent magnets 4.

The rotor core 3 includes a through-hole positioned at its center. The through-hole receives therein the aforementioned rotational shaft. The rotor core 3 has a structure in which annular electromagnetic steel plates are stacked in the axial direction of the rotor 1A.

In the present embodiment, the pole regions 2 include two symmetrical pole regions 21 and four asymmetrical pole regions 22. The two symmetrical pole regions 21 are positioned on opposite sides of the rotational axis 10 from each other, and two sets of two asymmetrical pole regions 22 are located between the symmetrical pole regions 21.

The overall shape of the pole regions 2 is rotationally symmetrical about the rotational axis 10, and is line-symmetrical with respect to particular lines passing through the rotational axis 10. In the present embodiment, in FIG. 1, the overall shape of the pole regions 2 is line-symmetrical with respect to a lateral line that is formed by the angle line 11 extending to the left from the rotational axis 10 and the angle line 11 extending to the right from the rotational axis 10. Further, in FIG. 1, the overall shape of the pole regions 2 is line-symmetrical with respect to a longitudinal line that is formed by the center line 20 extending upward from the rotational axis 10 and the center line 20 extending downward from the rotational axis 10.

Each symmetrical pole region 21 has a shape that is symmetrical with respect to the center line 20 of the symmetrical pole region 21. Specifically, each symmetrical pole region 21 includes two symmetrical permanent magnets 41 and 42, which cross the center line 20 of the symmetrical pole region 21. The symmetrical permanent magnets 41 and 42 are spaced apart from each other in the radial direction of the rotor 1A.

Each of the symmetrical permanent magnets 41 and 42 has a shape that is symmetrical with respect to the center line 20 of the symmetrical pole region 21. In the present embodiment, each of the symmetrical permanent magnets 41 and 42 has an arc shape that is convex toward the rotational axis 10. That is, the symmetrical permanent magnets 41 and 42 form double arcs.

Each asymmetrical pole region 22 has a shape that is asymmetrical with respect to the center line 20 of the asymmetrical pole region 22. In the present embodiment, the asymmetrical pole regions 22 include two asymmetrical pole regions 22A and two asymmetrical pole regions 22B. The asymmetrical pole regions 22A and 22B are positioned on both sides of the symmetrical pole regions 21. The shape of the asymmetrical pole regions 22A and the shape of the asymmetrical pole regions 22B are mirror images of each other.

Specifically, each asymmetrical pole region 22A includes two asymmetrical permanent magnets 43 and 44, which cross the center line 20 of the asymmetrical pole region 22A. The asymmetrical permanent magnets 43 and 44 are spaced apart from each other in the radial direction of the rotor 1A. Similarly, each asymmetrical pole region 22B includes two asymmetrical permanent magnets 45 and 46, which cross the center line 20 of the asymmetrical pole region 22B. The asymmetrical permanent magnets 45 and 46 are spaced apart from each other in the radial direction of the rotor 1A.

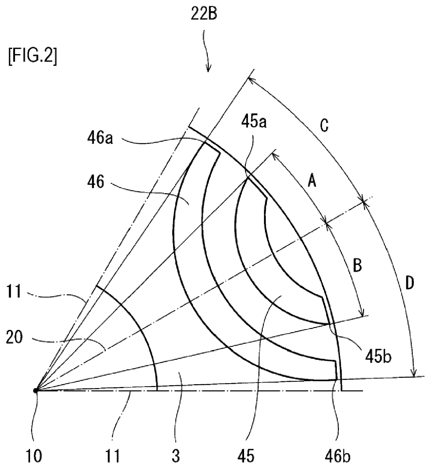

As described above, the shape of the asymmetrical pole regions 22A and the shape of the asymmetrical pole regions 22B are mirror images of each other. Accordingly, hereinafter, the shape of one asymmetrical pole region 22B is described with reference to FIG. 2 as a representative example.

Each of the asymmetrical permanent magnets 45 and 46 has a shape that is asymmetrical with respect to the center line 20 of the asymmetrical pole region 22B. In the present embodiment, each of the asymmetrical permanent magnets 45 and 46 has an arc shape that is convex toward the rotational axis 10. That is, the asymmetrical permanent magnets 45 and 46 form double arcs.

The asymmetrical permanent magnet 45 with a smaller radius of curvature has a shape in which an angle A, with respect to the rotational axis 10, from the center line 20 of the asymmetrical pole region 22B to one end 45a of the asymmetrical permanent magnet 45, and an angle B, with respect to the rotational axis 10, from the center line 20 of the asymmetrical pole region 22B to the other end 45b of the asymmetrical permanent magnet 45, are different from each other. For example, the angle A is from 14 to 16 degrees, and the angle B is from 16 to 18 degrees.

The asymmetrical permanent magnet 46 with a greater radius of curvature has a shape in which an angle C, with respect to the rotational axis 10, from the center line 20 of the asymmetrical pole region 22B to one end 46a of the asymmetrical permanent magnet 46, and an angle D, with respect to the rotational axis 10, from the center line 20 of the asymmetrical pole region 22B to the other end 46b of the asymmetrical permanent magnet 46, are different from each other. For example, the angle C is from 25 to 27 degrees, and the angle D is from 27 to 29 degrees.

Returning to FIG. 1, the six pole regions 2 are configured such that a total amount of magnetic flux at a rotor surface in each pole region 2 is equal among the pole regions 2. In the present embodiment, since the permanent magnets 4 are held inside the rotor core 3, the rotor surface means the surface of the rotor core 3. The total amount of magnetic flux at the rotor surface in each pole region 2 is obtained by integrating the magnetic flux density over the rotor surface for each pole region 2. Here, "a total amount of magnetic flux at a rotor surface in each pole region 2 is equal among the pole regions 2" means that, among all of the pole regions 2, a difference between a maximum value and a minimum value of the total amount of magnetic flux at the rotor surface is 10% or less of the maximum value.

As described above, in the rotor 1A of the present embodiment, the pole regions 2 include the four asymmetrical pole regions 22. Accordingly, torque ripple can be reduced by superimposing torque waveforms. In addition, since the overall shape of the pole regions 2 is both rotationally symmetrical and line-symmetrical, the torque characteristics of the rotor 1A do not change regardless of the rotation direction of the rotor 1A, and the occurrence of torque imbalance can also be suppressed.

Further, in the present embodiment, in each asymmetrical pole region 22, each permanent magnet 4 has an asymmetrical shape by making the angles from the center line 20 of the asymmetrical pole region 22 to both ends of the permanent magnet 4 different from each other. The shape of a portion close to the air gap has a significant influence on the phase of a torque waveform. Accordingly, by adopting the configuration of the present embodiment, the torque ripple reduction effect is increased as compared with a case where, in each asymmetrical pole region 22, each permanent magnet 4 has an asymmetrical shape while the angles from the center line 20 of the asymmetrical pole region 22 to both ends of the permanent magnet 4 are kept the same as each other.

Still further, in the present embodiment, since the total amount of magnetic flux at the rotor surface in each pole region 2 is equal among the pole regions 2, differences between attractive forces acting between the stator core and the respective pole regions 2 can be reduced, and thereby vibration noise and torque imbalance can be reduced.

### <Variations>

In each asymmetrical pole region 22, it is not essential that all of the permanent magnets 4 forming one permanent magnet group be asymmetrical, and it is sufficient that at least one of the permanent magnets 4 is asymmetrical. That is, in each asymmetrical pole region 22, both symmetrical and asymmetrical permanent magnets may coexist. Further, it is not essential that a permanent magnet group including multiple permanent magnets be located in each pole region 2. Alternatively, one permanent magnet may be located in each pole region 2.

Still further, the asymmetrical shape of each asymmetrical pole region 22 need not be realized by asymmetrical permanent magnets. For example, in a case where flux barriers are located on both sides of each permanent magnet 4, respectively, the asymmetrical shape of each asymmetrical pole region 22 may be realized by making the shapes of the flux barriers different from each other.

### <Embodiment 2>

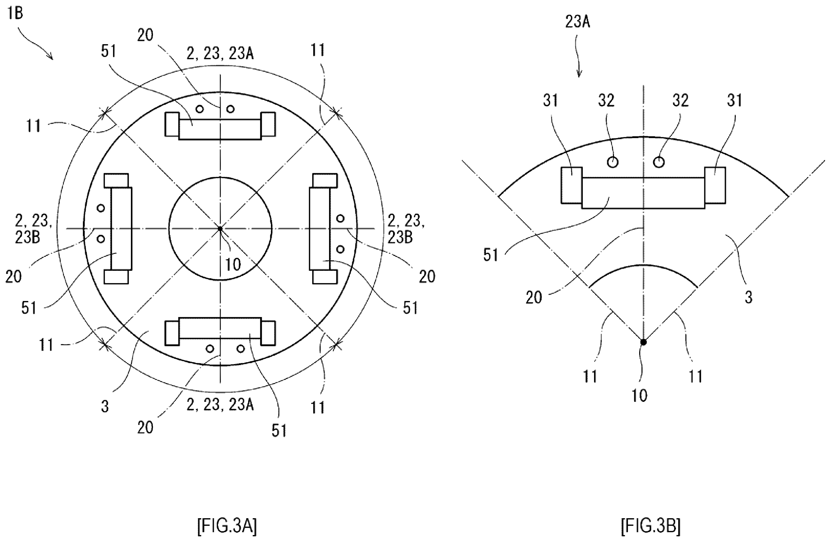

FIG. 3A shows an N-pole rotor 1B for use in an electric motor, according to Embodiment 2. In the present embodiment and the following Embodiments 3 to 5, the same components as those described in Embodiment 1 are denoted by the same reference signs as those used in Embodiment 1, and repeating the same descriptions is avoided.

In the present embodiment, N = 4. The rotor 1B includes four pole regions 2. Each pole region 2 includes a part of the rotor core 3 and a permanent magnet 51 held inside the rotor core 3. In the present embodiment, all of the pole regions 2 are asymmetrical pole regions 23.

Similar to Embodiment 1, the overall shape of the pole regions 2 is rotationally symmetrical about the rotational axis 10, and is line-symmetrical with respect to particular lines passing through the rotational axis 10. In the present embodiment, in FIG. 3A, the overall shape of the pole regions 2 is line-symmetrical with respect to a diagonal line that is formed by the angle line 11 extending from the rotational axis 10 diagonally toward the lower left and the angle line 11 extending from the rotational axis 10 diagonally toward the upper right. Further, in FIG. 3A, the overall shape of the pole regions 2 is line-symmetrical with respect to a diagonal line that is formed by the angle line 11 extending from the rotational axis 10 diagonally toward the upper left and the angle line 11 extending from the rotational axis 10 diagonally toward the lower right.

Each asymmetrical pole region 23 has a shape that is asymmetrical with respect to the center line 20 of the asymmetrical pole region 23. In the present embodiment, the asymmetrical pole regions 23 include two asymmetrical pole regions 23A and two asymmetrical pole regions 23B. The asymmetrical pole regions 23A and the asymmetrical pole regions 23B are located alternately, and the shape of the asymmetrical pole regions 23A and the shape of the asymmetrical pole regions 23B are mirror images of each other. Therefore, hereinafter, the shape of one asymmetrical pole region 23A is described with reference to FIG. 3B as a representative example.

The aforementioned permanent magnet 51 crosses the center line 20 of the asymmetrical pole region 23A. The permanent magnet 51 has a symmetrical shape with respect to the center line 20 of the asymmetrical pole region 23A. In the present embodiment, the permanent magnet 51 extends in a direction orthogonal to the center line 20.

In the present embodiment, flux barriers 31 are located on both sides of the permanent magnet 51, respectively, in the rotor core 3. Each of the flux barriers 31 may be a void, or may be made of a non-magnetic material such as resin. The flux barriers 31 have such a shape that they are symmetrical with respect to the center line 20 of the asymmetrical pole region 23A.

Further, in the present embodiment, the rotor core 3 includes two hole 32, which are located on the outer side relative to the permanent magnet 51. The two holes 32 are positioned on both sides of the center line 20 of the asymmetrical pole region 23A, respectively. The two holes 32 have the same shape. However, the distance from the center line 20 of the asymmetrical pole region 23A to the center of one hole 32, and the distance from the center line 20 of the asymmetrical pole region 23A to the center of the other hole 32, are different from each other. Due to such a positional difference between the holes 32, the asymmetrical pole region 23A has an asymmetrical shape.

Similar to Embodiment 1, the four pole regions 2 are configured such that the total amount of magnetic flux at the rotor surface in each pole region 2 is equal among the four pole regions 2.

Similar to Embodiment 1, also in the present embodiment, since the pole regions 2 include the four asymmetrical pole regions 23, torque ripple can be reduced by superimposing torque waveforms. In addition, since the overall shape of the pole regions 2 is both rotationally symmetrical and line-symmetrical, the torque characteristics of the rotor 1B do not change regardless of the rotation direction of the rotor 1B, and the occurrence of torque imbalance can also be suppressed.

Further, in the present embodiment, since the total amount of magnetic flux at the rotor surface in each pole region 2 is equal among the pole regions 2, differences between attractive forces acting between the stator core and the respective pole regions 2 can be reduced, and thereby vibration noise and torque imbalance can be reduced.

### <Variations>

The configuration for each asymmetrical pole region 23 to have an asymmetrical shape is modifiable as necessary. For example, the distances from the center line 20 of the asymmetrical pole region 23 to the centers of the two holes 32 may be the same as each other, and the shapes of the holes 32 may be made different from each other. The number of holes 32 need not be two, but may be one, or three or more.

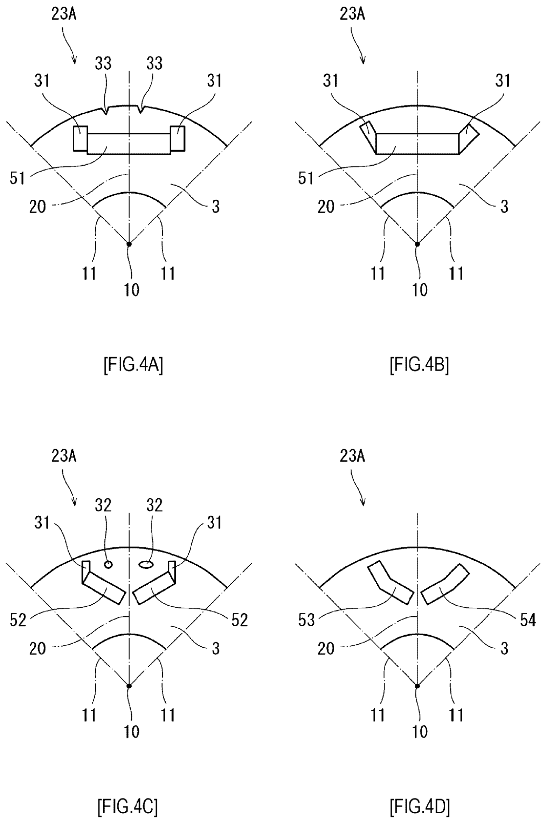

Alternatively, as shown in FIG. 4A, the surface of the rotor core 3 may include two notches 33 instead of the holes 32, and the positions or shapes of the notches 33 may be made different from each other. Further alternatively, as shown in FIG. 4B, without the holes 32 or the notches 33, the shapes of the flux barriers 31 may be made asymmetrical.

Further alternatively, as shown in FIG. 4C, each pole region 2 may include permanent magnets 52 forming a permanent magnet group. In the example shown in FIG. 4C, due to a difference in shape between the holes 32, the asymmetrical pole region 23 has an asymmetrical shape.

Further alternatively, as shown in FIG. 4D, the shape of the asymmetrical pole region 23 may be made asymmetrical by making the shapes of permanent magnets 53 and 54 forming a permanent magnet group asymmetrical. Further alternatively, in a case where one permanent magnet 4 is located in each pole region 2, the shape of the permanent magnet 4 may be made asymmetrical.

Further alternatively, in each pole region 2, a permanent magnet may extend along the center line 20 of the pole region 2 such that the permanent magnets are in a spoke-like arrangement. In this case, in order for the asymmetrical pole region 23 to have an asymmetrical shape, the positions or shapes of holes or notches in the rotor core 3 may be made different from each other, or the shape of a flux barrier that is located on the outer side of the permanent magnet in the radial direction of the rotor may be made asymmetrical, or the shape of the permanent magnet may be made asymmetrical.

### <Embodiment 3>

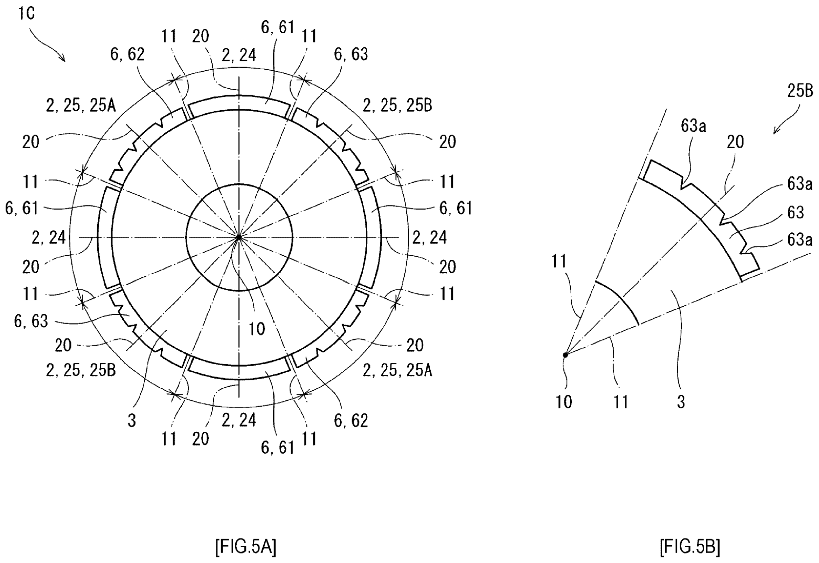

FIG. 5A shows an N-pole rotor 1C for use in an electric motor, according to Embodiment 3. In the present embodiment, N = 8. The rotor 1C includes eight pole regions 2. Further, in the present embodiment, N permanent magnets 6 located in the circumferential direction are held on the surface of the rotor core 3. This is called SPM (Surface Permanent Magnet).

The pole regions 2 include four symmetrical pole regions 24 and four asymmetrical pole regions 25. The symmetrical pole regions 24 and the asymmetrical pole regions 25 are located alternately.

Similar to Embodiment 1, the overall shape of the pole regions 2 is rotationally symmetrical about the rotational axis 10, and is line-symmetrical with respect to particular lines passing through the rotational axis 10. In the present embodiment, in FIG. 5A, the overall shape of the pole regions 2 is line-symmetrical with respect to a lateral line that is formed by the center line 20 extending to the left from the rotational axis 10 and the center line 20 extending to the right from the rotational axis 10. Further, in FIG. 5A, the overall shape of the pole regions 2 is line-symmetrical with respect to a longitudinal line that is formed by the center line 20 extending upward from the rotational axis 10 and the center line 20 extending downward from the rotational axis 10.

Each symmetrical pole region 24 has a shape that is symmetrical with respect to the center line 20 of the symmetrical pole region 24. Specifically, each symmetrical pole region 24 includes an arc-shaped symmetrical permanent magnet 61. The outer side surface of the symmetrical permanent magnet 61 is a smooth surface, and the symmetrical permanent magnet 61 has a shape that is symmetrical with respect to the center line 20 of the symmetrical pole region 24.

Each asymmetrical pole region 25 has a shape that is asymmetrical with respect to the center line 20 of the asymmetrical pole region 25. In the present embodiment, the asymmetrical pole regions 25 include two asymmetrical pole regions 25A and two asymmetrical pole regions 25B. The asymmetrical pole regions 25A and the asymmetrical pole regions 25B are located alternatively, with the symmetrical pole regions 24 located between them. The shape of the asymmetrical pole regions 25A and the shape of the asymmetrical pole regions 25B are mirror images of each other.

Specifically, each asymmetrical pole region 25A includes an arc-shaped asymmetrical permanent magnet 62, and each asymmetrical pole region 23B includes an arc-shaped asymmetrical permanent magnet 63. As described above, the shape of the asymmetrical pole regions 25A and the shape of the asymmetrical pole regions 25B are mirror images of each other. Accordingly, hereinafter, the shape of one asymmetrical pole region 25B is described with reference to FIG. 5B as a representative example.

The asymmetrical permanent magnet 63 has a shape that is asymmetrical with respect to the center line 20 of the asymmetrical pole region 25B. In the present embodiment, there are three notches 63a in the outer side surface of the asymmetrical permanent magnet 63. One of the three notches 63a is positioned on one side of the center line 20 of the asymmetrical pole region 25B, and the remaining two notches 63a are positioned on the other side of the center line 20 of the asymmetrical pole region 25B. Due to such arrangement of the notches 63a, the asymmetrical pole region 25B has an asymmetrical shape.

Similar to Embodiment 1, also in the present embodiment, the eight pole regions 2 are configured such that the total amount of magnetic flux at the rotor surface in each pole region 2 is equal among the eight pole regions 2. In the present embodiment, since the permanent magnets 6 are held on the surface of the rotor core 3, the rotor surface is the surface of each permanent magnet 6.

Similar to Embodiment 1, also in the present embodiment, since the pole regions 2 include four asymmetrical pole regions 25, torque ripple can be reduced by superimposing torque waveforms. In addition, since the overall shape of the pole regions 2 is both rotationally symmetrical and line-symmetrical, the torque characteristics of the rotor 1C do not change regardless of the rotation direction of the rotor 1C, and the occurrence of torque imbalance can also be suppressed.

Still further, in the present embodiment, since the total amount of magnetic flux at the rotor surface in each pole region 2 is equal among the pole regions 2, differences between attractive forces acting between the stator core and the respective pole regions 2 can be reduced, and thereby vibration noise and torque imbalance can be reduced.

### <Variations>

The configuration for each asymmetrical pole region 25 to have an asymmetrical shape is modifiable as necessary. For example, each asymmetrical pole region 25 may include only one notch in the outer side surface of the asymmetrical permanent magnet 62 or 63, and the one notch may be positioned on one or the other side of the center line 20 of the asymmetrical pole region 25.

Alternatively, each asymmetrical pole region 25 may include two notches in the outer side surface of the asymmetrical permanent magnet 62 or 63. Each of these two notches may be positioned at the same distance from the center line 20 of the asymmetrical pole region 25, and the shapes of these two notches may be made different from each other.

### <Embodiment 4>

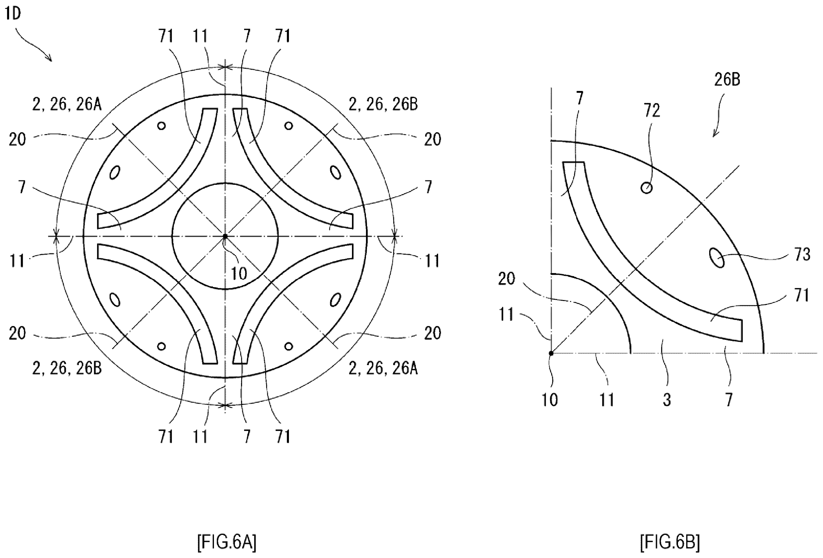

FIG. 6A shows an N-pole rotor 1D for use in an electric motor, according to Embodiment 4. In the present embodiment, the rotor 1D is a synchronous-reluctance rotor, and the rotor core 3 includes N salient poles 7 located in the circumferential direction.

In the present embodiment, N = 4. The rotor 1D includes four pole regions 2. Further, in the present embodiment, the angle lines 11, which divide the pole regions 2, also serve as center lines of the respective salient poles 7. In other words, the four pole regions 2 are obtained by equally dividing the rotor core 3 into N portions along the center lines of the respective salient poles 7.

In the present embodiment, each pole region 2 includes an arc-shaped flux barrier 71, which is convex toward the rotational axis 10. The flux barrier 71 may be a void, or may be made of a non-magnetic material such as resin. Portions between ends of adjacent flux barriers 71 serve as the salient poles 7. Each pole region 2 may include a flux barrier group that is formed by flux barriers 71 in concentric arrangement.

In the present embodiment, all of the pole regions 2 are asymmetrical pole regions 26. Similar to Embodiment 1, the overall shape of the pole regions 2 is rotationally symmetrical about the rotational axis 10, and is line-symmetrical with respect to particular lines passing through the rotational axis 10. In the present embodiment, in FIG. 6A, the overall shape of the pole regions 2 is line-symmetrical with respect to a lateral line that is formed by the angle line 11 extending to the left from the rotational axis 10 and the angle line 11 extending to the right from the rotational axis 10. Further, in FIG. 6A, the overall shape of the pole regions 2 is line-symmetrical with respect to a longitudinal line that is formed by the angle line 11 extending upward from the rotational axis 10 and the angle line 11 extending downward from the rotational axis 10.

Each asymmetrical pole region 26 has a shape that is asymmetrical with respect to the center line 20 of the asymmetrical pole region 26. In the present embodiment, the asymmetrical pole regions 26 include two asymmetrical pole regions 26A and two asymmetrical pole regions 26B. The asymmetrical pole regions 26A and the asymmetrical pole regions 26B are located alternately, and the shape of the asymmetrical pole regions 26A and the shape of the asymmetrical pole regions 26B are mirror images of each other. Therefore, hereinafter, the shape of one asymmetrical pole region 26B is described with reference to FIG. 6B as a representative example.

The rotor core 3 includes two holes 72 and 73, which are located on the outer side relative to the flux barrier 71. The holes 72 and 73 are positioned on both sides of the center line 20 of the asymmetrical pole region 26B, respectively. The distance from the center line 20 of the asymmetrical pole region 26B to the center of one hole 72, and the distance from the center line 20 of the asymmetrical pole region 26B to the center of the other hole 73, are the same. However, the shapes of the holes 72 and 73 are different from each other. Due to the difference in shape between the holes 72 and 73, the asymmetrical pole region 26B has an asymmetrical shape.

Similar to Embodiment 1, the four pole regions 2 are configured such that the total amount of magnetic flux at the rotor surface in each pole region 2 is equal among the four pole regions 2.

Similar to Embodiment 1, also in the present embodiment, since the pole regions 2 include the four asymmetrical pole regions 26, torque ripple can be reduced by superimposing torque waveforms. In addition, since the overall shape of the pole regions 2 is both rotationally symmetrical and line-symmetrical, the torque characteristics of the rotor 1D do not change regardless of the rotation direction of the rotor 1D, and the occurrence of torque imbalance can also be suppressed.

Further, in the present embodiment, since the total amount of magnetic flux at the rotor surface in each pole region 2 is equal among the pole regions 2, differences between attractive forces acting between the stator core and the respective pole regions 2 can be reduced, and thereby vibration noise and torque imbalance can be reduced.

### <Variations>

The configuration for each asymmetrical pole region 26 to have an asymmetrical shape is modifiable as necessary. For example, while making the shapes of the holes 72 and 73 the same as each other, the distances from the center line 20 of the asymmetrical pole region 26 to the centers of the holes 72 and 73 may be made different from each other. Alternatively, one of the holes 72 and 73 may be eliminated.

Further alternatively, instead of the holes 72 and 73, the surface of the rotor core 3 may include two notches, and the positions or shapes of the notches may be made different from each other. Further alternatively, without the holes 72 and 73 or the notches, the shape of the flux barrier 71 may be made asymmetrical.

### <Embodiment 5>

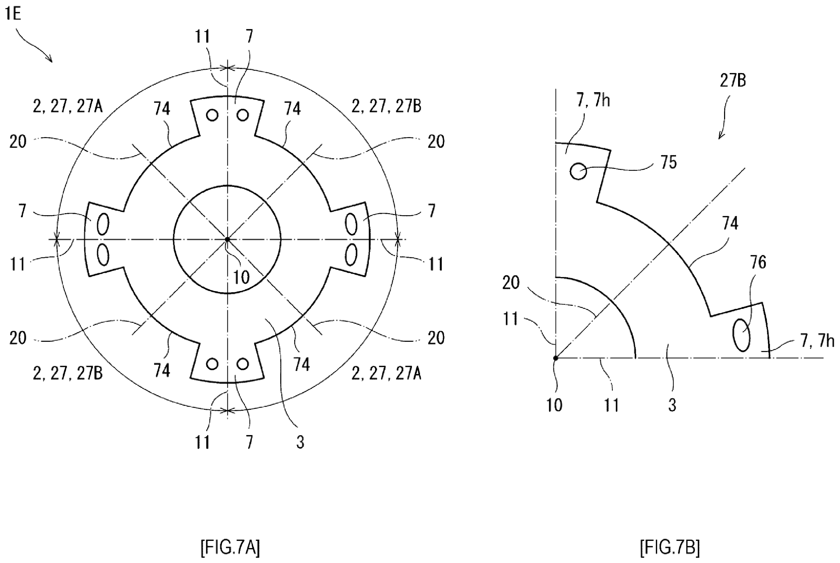

FIG. 7A shows an N-pole rotor 1E for use in an electric motor, according to Embodiment 5. Similar to Embodiment 4, also in the present embodiment, the rotor 1E is a synchronous-reluctance rotor, and the rotor core 3 includes N salient poles 7 located in the circumferential direction.

In the present embodiment, N = 4. The rotor 1E includes four pole regions 2. Further, in the present embodiment, the angle lines 11, which divide the pole regions 2, also serve as center lines of the respective salient poles 7. In other words, the four pole regions 2 are obtained by equally dividing the rotor core 3 into N portions along the center lines of the salient poles 7.

In the present embodiment, there are four grooves 74 in the outer peripheral surface of the rotor core 3, and the four grooves 74 are located at regular angular intervals. The salient poles 7 are located between these grooves 74.

In the present embodiment, all of the pole regions 2 are asymmetrical pole regions 27. Similar to Embodiment 1, the overall shape of the pole regions 2 is rotationally symmetrical about the rotational axis 10, and is line-symmetrical with respect to particular lines passing through the rotational axis 10. In the present embodiment, in FIG. 7A, the overall shape of the pole regions 2 is line-symmetrical with respect to a lateral line that is formed by the angle line 11 extending to the left from the rotational axis 10 and the angle line 11 extending to the right from the rotational axis 10. Further, in FIG. 7A, the overall shape of the pole regions 2 is line-symmetrical with respect to a longitudinal line that is formed by the angle line 11 extending upward from the rotational axis 10 and the angle line 11 extending downward from the rotational axis 10.

Each asymmetrical pole region 27 has a shape that is asymmetrical with respect to the center line 20 of the asymmetrical pole region 27. In the present embodiment, the asymmetrical pole regions 27 include two asymmetrical pole regions 27A and two asymmetrical pole regions 27B. The asymmetrical pole regions 27A and the asymmetrical pole regions 27B are located alternately, and the shape of the asymmetrical pole regions 27A and the shape of the asymmetrical pole regions 27B are mirror images of each other. Therefore, hereinafter, the shape of one asymmetrical pole region 27B is described with reference to FIG. 7B as a representative example.

The asymmetrical pole region 27B includes, on both sides of the groove 74, salient pole half bodies 7h, each of which is a half of a salient pole 7. The salient pole half bodies 7h include holes 75 and 76, respectively. The distance from the center line 20 of the asymmetrical pole region 27B to the center of one hole 75, and the distance from the center line 20 of the asymmetrical pole region 27B to the center of the other hole 76, are the same. However, the shapes of the holes 75 and 76 are different from each other. Due to the difference in shape between the holes 75 and 76, the asymmetrical pole region 27B has an asymmetrical shape.

Similar to Embodiment 1, the four pole regions 2 are configured such that the total amount of magnetic flux at the rotor surface in each pole region 2 is equal among the four pole regions 2.

Similar to Embodiment 1, also in the present embodiment, since the pole regions 2 include the four asymmetrical pole regions 27, torque ripple can be reduced by superimposing torque waveforms. In addition, since the overall shape of the pole regions 2 is both rotationally symmetrical and line-symmetrical, the torque characteristics of the rotor 1E do not change regardless of the rotation direction of the rotor 1E, and the occurrence of torque imbalance can also be suppressed.

Further, in the present embodiment, since the total amount of magnetic flux at the rotor surface in each pole region 2 is equal among the pole regions 2, differences between attractive forces acting between the stator core and the respective pole regions 2 can be reduced, and thereby vibration noise and torque imbalance can be reduced.

### <Variations>

The configuration for each asymmetrical pole region 27 to have an asymmetrical shape is modifiable as necessary. For example, while making the shapes of the holes 75 and 76 the same as each other, the distances from the center line 20 of the asymmetrical pole region 26 to the centers of the holes 75 and 76 may be made different from each other. Alternatively, one of the holes 75 and 76 may be eliminated.

Further alternatively, instead of the holes 75 and 76, distal end surfaces of the respective salient pole half bodies 7h may include notches, respectively, and the positions or shapes of the notches may be made different from each other. Further alternatively, without the holes 75 and 76 or the notches, the shape of the bottom surface of the groove 74 or the shapes of the salient pole half bodies 7h may be made asymmetrical.

### <Other Embodiments>

The present disclosure is not limited to the above-described embodiments. Various modifications can be made without departing from the scope of the present disclosure.

For example, N is not limited to 4, 6, or 8 mentioned above, but may be 10 or greater. In such a case, the pole regions 2 include at least four asymmetrical pole regions. Alternatively, the pole regions 2 may include at least two symmetrical pole regions.

Further, if N is 6 or greater, then similar to Embodiment 1 or Embodiment 3, the shapes of the pole regions 2 can be set to three or more different types, which makes it possible to effectively reduce torque ripple. This is because a torque waveform includes ripple, and the ripple can be reduced by superimposing torque waveforms having different phases from each other.

### <Summary>

The present disclosure provides, as a first mode, a rotor for use in an electric motor, the rotor being an N-pole rotor (N is an even number greater than or equal to 4), the rotor including pole regions that are obtained by equally dividing the rotor into N portions about a rotational axis, wherein: an overall shape of the pole regions is rotationally symmetrical about the rotational axis, and is line-symmetrical with respect to a particular line passing through the rotational axis; the pole regions include at least four asymmetrical pole regions; and each asymmetrical pole region has a shape that is asymmetrical with respect to a center line of the asymmetrical pole region.

According to the above configuration, since the pole regions include at least four asymmetrical pole regions, torque ripple can be reduced by superimposing torque waveforms. In addition, since the overall shape of the pole regions is both rotationally symmetrical and line-symmetrical, the torque characteristics of the rotor do not change regardless of the rotation direction of the rotor, and the occurrence of torque imbalance can also be suppressed.

As a second mode, in the first mode, the even number N may be 6 or greater. According to this configuration, the shapes of the pole regions can be set to three or more different types, which makes it possible to effectively reduce torque ripple. This is because a torque waveform includes ripple, and the ripple can be reduced by superimposing torque waveforms having different phases from each other.

As a third mode, in the second mode, for example: the pole regions may include at least two symmetrical pole regions; and each symmetrical pole region may have a shape that is symmetrical with respect to a center line of the symmetrical pole region.

As a fourth mode, in any of the first to third modes, for example, each of the pole regions may include a part of a rotor core and at least one permanent magnet that is held on a surface of the rotor core or inside the rotor core.

As a fifth mode, in the fourth mode, the at least one permanent magnet may be held inside the rotor core; of the at least four asymmetrical pole regions, each asymmetrical pole region may include at least one asymmetrical permanent magnet that crosses the center line of the asymmetrical pole region; and the asymmetrical permanent magnet may have a shape in which an angle, with respect to the rotational axis, from the center line of the asymmetrical pole region to one end of the asymmetrical permanent magnet, and an angle, with respect to the rotational axis, from the center line of the asymmetrical pole region to the other end of the asymmetrical permanent magnet, are different from each other. The shape of a portion close to the air gap has a significant influence on the phase of a torque waveform. Accordingly, by adopting the configuration in which the permanent magnet has an asymmetrical shape by making the angles from the center line of the asymmetrical pole region to both ends of the permanent magnet different from each other, the torque ripple reduction effect is increased as compared with a case where the permanent magnet has an asymmetrical shape while the angles from the center line of the asymmetrical pole region to both ends of the permanent magnet are kept the same as each other.

As a sixth mode, in the fourth or fifth mode, the pole regions may be configured such that a total amount of magnetic flux at a rotor surface in each pole region is equal among the pole regions. According to this configuration, differences between attractive forces acting between the stator core and the respective pole regions can be reduced, and thereby vibration noise and torque imbalance can be reduced.

As a seventh mode, in any of the first to third modes, for example, the pole regions may be obtained by equally dividing a rotor core including N salient poles located in a circumferential direction into N portions along center lines of the respective salient poles.

## Claims

1. A rotor for use in an electric motor, the rotor being an N-pole rotor (N is an even number greater than or equal to 4),
the rotor comprising pole regions that are obtained by equally dividing the rotor into N portions about a rotational axis, wherein:
an overall shape of the pole regions is rotationally symmetrical about the rotational axis, and is line-symmetrical with respect to a particular line passing through the rotational axis;
the pole regions include at least four asymmetrical pole regions; and
each asymmetrical pole region has a shape that is asymmetrical with respect to a center line of the asymmetrical pole region.

2. The rotor for use in an electric motor, according to claim 1, wherein the even number N is 6 or greater.

3. The rotor for use in an electric motor, according to claim 2, wherein:
the pole regions include at least two symmetrical pole regions; and
each symmetrical pole region has a shape that is symmetrical with respect to a center line of the symmetrical pole region.

4. The rotor for use in an electric motor, according to any one of claims 1 to 3, wherein each of the pole regions includes a part of a rotor core and at least one permanent magnet that is held on a surface of the rotor core or inside the rotor core.

5. The rotor for use in an electric motor, according to claim 4, wherein:
the at least one permanent magnet is held inside the rotor core;
of the at least four asymmetrical pole regions, each asymmetrical pole region includes at least one asymmetrical permanent magnet that crosses the center line of the asymmetrical pole region; and
the asymmetrical permanent magnet has a shape in which an angle, with respect to the rotational axis, from the center line of the asymmetrical pole region to one end of the asymmetrical permanent magnet, and an angle, with respect to the rotational axis, from the center line of the asymmetrical pole region to the other end of the asymmetrical permanent magnet, are different from each other.

6. The rotor for use in an electric motor, according to claim 4, wherein the pole regions are configured such that a total amount of magnetic flux at a rotor surface in each pole region is equal among the pole regions.

7. The rotor for use in an electric motor, according to any one of claims 1 to 3, wherein the pole regions are obtained by equally dividing a rotor core including N salient poles located in a circumferential direction into N portions along center lines of the respective salient poles.
